# EUROPEAN PATENT APPLICATION

(11) **EP 2 975 738 A1**
(43) Date of publication of application: **20.01.2016**
(21) Application number: 14425096.6
(22) Date of filing: 16.07.2014
(51) Int. Cl.: H02K 5/22, H02K 11/00, H02K 11/02, H01R 31/06, H01R 13/66

(54) **Electric connector adapter assembly for circulator pumps with synchronous motor, for heating, ventilating and air conditioning systems**

(71) Applicant: Askoll Holding S.r.l. a socio unico, 36031 Povolaro di Dueville (VI) (IT)
(72) Inventor: Marioni, Elio, I-36031 Dueville (Vicenza) (IT)
(74) Representative: Antonucci, Emanuele

(57) **Abstract**

Adapter assembly (1) for allowing control of an inverter-type synchronous circulator by means of external control devices designed to control asynchronous-technology circulators, comprising: at least one rigid casing (2) provided with at least one upstream electrical connector (20) intended to be removably connected to the end connector (30) of a power and/or signal cable (3), and at least one respective downstream electrical connector (21) intended to be directly connected, removably, to a synchronous-motor circulator (90) provided with an integrated inverter; and an adapter circuit (22) housed inside said at least one rigid casing (2) and connecting the at least one upstream electrical connector (20) to the respective downstream electrical connector (21).

## Description

### Field of application

The present invention relates, according to its more general aspect, to an adapter assembly for electronic circulators, in particular of the synchronous motor type, applied to heating and/or conditioning systems.

As mentioned above, the invention is intended therefore for the technological sector of heating and/or conditioning systems.

### Prior Art

Centrifugal electric pumps, which are generally known by the name of circulators, are generally used for circulation of the carrier fluid in heating and/or cooling systems.

If, in the past, these circulators were mainly operated by means of asynchronous technology, more recently inverter-controlled circulators of the synchronous electric motor type have gradually become more widespread owing to their greater efficiency and adjusting precision. In particular on a European level, the latest standards issued in the sector (European Regulation 641/2009/EC and subsequent amendment 622/2012; harmonization standard EN16297) have stipulated high efficiency values for both stand-alone and integrated circulators, and the various manufacturers have had to change over rapidly to inverter-controlled synchronous technology in order to comply with these standards.

The sudden change in technology, while providing undeniable advantages for the end user, nevertheless has several not insignificant drawbacks relating in particular to the associated obsolescence of the control boards of the existing heating and/or cooling systems, which were originally designed to drive electric pumps of the asynchronous type.

These control boards, which are housed inside a specific control unit of the circulator rather than being integrated in the control board of a boiler or a heater, are not in fact able to transmit a control signal to the control inverter of the synchronous circulator, with the risk in particular of being damaged by the potentially high inrush currents caused by the same inverter.

In greater detail, the introduction of synchronous-technology circulators into existing heating and/or cooling systems, mostly equipped with control boards unsuitable for the new devices, has given rise to the requirements listed and discussed below.
- Need to maintain the manual speed selector of the previous synchronous system.
- Need to be able to operate the synchronous inverter-controlled circulator by means of a TRIAC.
- Need for a speed adjustment control device with use of a TRIAC and all the power-regulating techniques normally used with asynchronous circulators.
- Need for speed adjustment control by means of a relay which divides the winding of the circulator in order to modify the flow and hence the speed of the asynchronous circulators.
- Need to protect the electronic control board from the high inrush currents which are produced by the inverter of the circulator and which may impair the relays or damage the TRIACS of the said electronic control board of the circulator.
- Need to vary the speed using different techniques/logic systems (PWM, RS232, KNX, 0-10V, etc.).
- Need for EMI (Electromagnetic Interference) filters in order to lower the disturbance levels, which are higher on inverter-controlled synchronous motors than on asynchronous motors, or in order to protect the electronics of the inverter-controlled synchronous circulator from external interference.

Patent application EP 2 385 531 proposes a possible solution to one of the aforementioned requirements, in particular the need to protect the components of the external control system from the inrush currents caused by the inverter of the synchronous circulator.

The application suggests in particular the use of specific interface cables provided with an NTC thermistor which intercepts at least one of the live and/or neutral conductors.

The aforementioned solution, while representing an improvement compared to the prior known art, however deals only with protection against the inrush currents, while the further requirements mentioned in the above list remain unsolved.

Moreover, the integration of the protection element inside the power supply cable results in a limited versatility of the circulator/control board interface system proposed in the aforementioned European patent application. In fact, the cable provided with inrush protection must have dimensions suitable for connecting the circulator to the control board. Different systems may require different size cables such that a wide range of dedicated cables is required depending on the different types of system, unless the cable is cut in order to adapt it to the specific installation.

It should be noted moreover that the introduction of protection device proposed requires in any case replacement of the prior power supply cable, resulting in the need for unjustified discarding of electrical material.

The underlying technical problem of the present invention therefore is that of devising a device which solves at least one of the problems mentioned above, overcoming at the same time the drawbacks of the sole solution known hitherto.

### Summary of the invention

The aforementioned technical problem is solved by an adapter assembly for a circulator, comprising: at least one rigid casing provided with at least one upstream electrical connector intended to be removably connected to the end connector of a power and/or signal cable, and at least one respective downstream electrical connector intended to be directly connected, removably, to a synchronous-motor circulator; and an adapter circuit housed inside said at least one rigid casing and connecting the at least one upstream electrical connector to the respective downstream electrical connector.

As will be evident to a person skilled in the art, the aforementioned device allows simple and immediate adaptation of the internal circuitry of the synchronous motor, which may be inverter-controlled, to external control devices designed to control the operation of asynchronous-technology circulators. By means of the integration of one or more compact rigid casings in the vicinity of the various circulator inlets, all the necessary additional circuitry may be introduced in a removable manner so as to provide a reliable interface between it and the old control board, without having to replace the components inside either one of said devices nor without being obliged to use a dedicated transmission cable.

The upstream electrical connector may be designed in particular for connection to a power cable, in which case said adapter circuitry comprises at least one power supply adapter circuit designed to receive an electrical power supply via said power cable connected to the upstream electrical connector and transmit it to the circulator by means of the respective downstream electrical connector, said power supply adapter circuit comprising advantageously means for protection against the inrush currents which are generated by the inverter for controlling operation of the synchronous circulator.

Said means for protection against the inrush currents may comprise in particular at least one NTC thermistor.

Said power supply adapter circuit may also advantageously comprise at least one EMI filter which may be provided with a protection varistor at the input in order to lower the disturbance levels which are greater on inverter-controlled synchronous motors than on asynchronous motors and in order to protect the electronics of the inverter-controlled synchronous circulator from external interference.

The at least one upstream electrical connector may be designed for connection to a signal cable, in which case said adapter circuitry comprises at least one signal adapter circuit, the input of which is connected to the upstream electrical connector and the output of which is connected to the respective downstream electrical connector, said signal adapter circuit being designed to convert an upstream control signal, for example an analog signal originally designed to control an asynchronous-motor circulator, into a PWM control signal, suitable for controlling a synchronous-motor circulator, preferably suitable for controlling a control inverter of said circulator.

Said rigid casing may comprise both the power supply and signal adapter circuits or only one of them.

In an alternative embodiment, the adapter assembly may comprise two rigid casings which are independent of each other: a first rigid casing which contains the power supply adapter circuit and a second rigid casing which contains the signal adapter circuit; said first and second rigid casings both comprising respective upstream and downstream electrical connectors.

The downstream electrical connector may be directly joined, without any interconnecting wires, to an electronic board which forms said adapter circuitry, for example by means of a terminal-like connection; the upstream electrical connector may be directly provided on the periphery of said electronic board.

Preferably, the downstream electrical connector is situated opposite said upstream electrical connector, such that the two connectors may be arranged at the two opposite ends of an internal electronic board. Said upstream electrical connector and said downstream electrical connector may be, respectively, a female connector and male connector, or vice versa, compatible with each other.

Further characteristic features and advantages of the present invention will emerge from the description, provided hereinbelow, of a number of preferred examples of embodiment provided by way of a non-limiting example with reference to the accompanying drawings.

### Brief description of the drawings

Figure 1 shows a top plan view of an overall unit comprising an adapter assembly, in accordance with a first embodiment of the present invention, mounted as an interface between a circulator and a power cable;
Figure 2 shows a side view of the assembled overall unit according to Figure 1;
Figure 3 shows a front view of the assembled overall unit according to Figure 1;
Figure 4 shows a perspective view of the assembled overall unit according to Figure 1;
Figure 5 shows the same perspective view as Figure 4, where the adapter assembly is separated from the circulator;
Figure 6 shows a front view of the assembled overall unit according to Figure 1, cross-sectioned along a centre plane;
Figure 7 shows the same perspective view as Figure 6, where the adapter assembly is separated from the circulator;
Figure 8 shows a front view of an overall unit comprising an adapter assembly, in accordance with a second embodiment of the present invention, mounted as an interface between a circulator and a power and signal cable;
Figure 9 shows a top plan view of the assembled overall unit according to Figure 8;
Figure 10 shows a side view of the assembled overall unit according to Figure 8;
Figure 11 shows a perspective view of the assembled overall unit according to Figure 8;
Figure 12 shows the same perspective view as Figure 11, where the adapter assembly is separated from the circulator;
Figure 13 shows a front view of the assembled overall unit according to Figure 8, cross-sectioned along a centre plane;
Figure 14 shows the same perspective view as Figure 13, where the adapter assembly is separated from the circulator;
Figure 15 shows a top plan view of an overall unit comprising an adapter assembly, in accordance with a third embodiment of the present invention, comprising a first rigid casing mounted as an interface between a circulator and a power cable and a second rigid casing mounted as an interface between said circulator and a control cable;
Figure 16 shows a side view of the assembled overall unit according to Figure 15;
Figure 17 shows a front view of the assembled overall unit according to Figure 15;
Figure 18 shows a perspective view of the assembled overall unit according to Figure 15;
Figure 19 shows the same perspective view as Figure 18, where the two rigid casings of the adapter assembly are both separated from the circulator;
Figure 20 shows a side view of the assembled overall unit according to Figure 15;
Figure 21 shows again the same top plan view of the overall unit shown in Figure 15, suitable for allowing immediate comparison with the following figures;
Figure 22 shows the same perspective view as Figure 20, where only the first rigid casing of the adapter assembly is separated from the circulator;
Figure 23 shows the same top plan view as Figure 21, where only the second rigid casing of the adapter assembly is separated from the circulator;
Figure 24 shows an internal circuit of some embodiments of the adapter assembly shown in the preceding figures;
Figure 25 shows an internal circuit of some embodiments of the adapter assembly shown in the preceding figures, which is an alternative to that shown in Figure 24;
Figure 26 shows a functional diagram of an internal circuit of some embodiments of the adapter assembly shown in the preceding figures.

### Detailed description

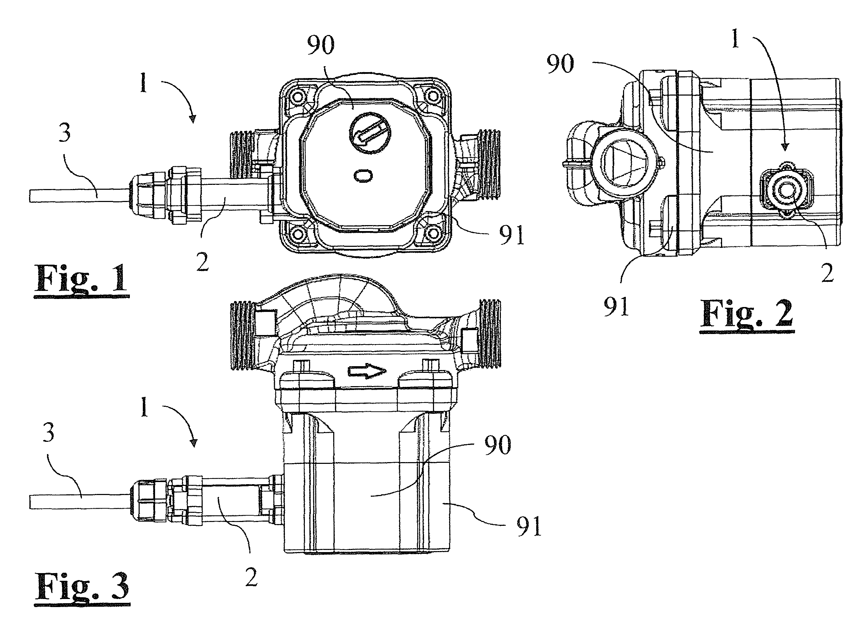

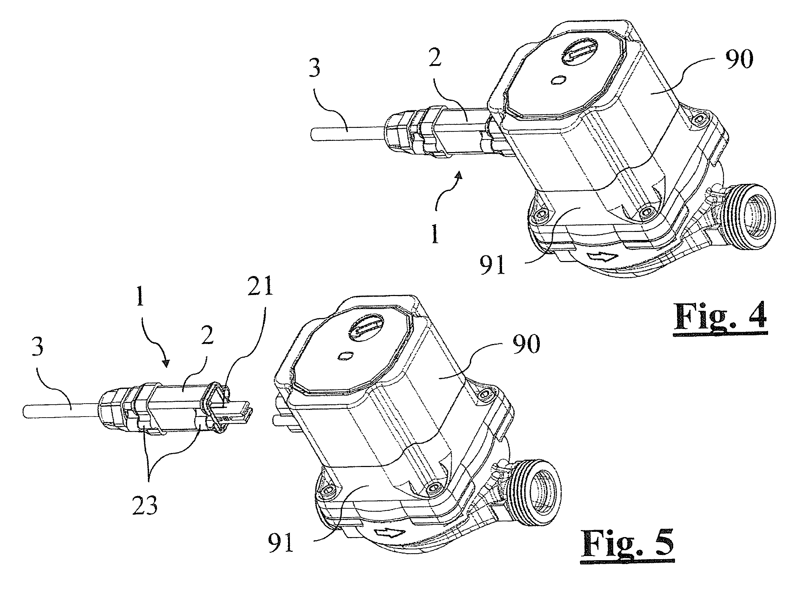

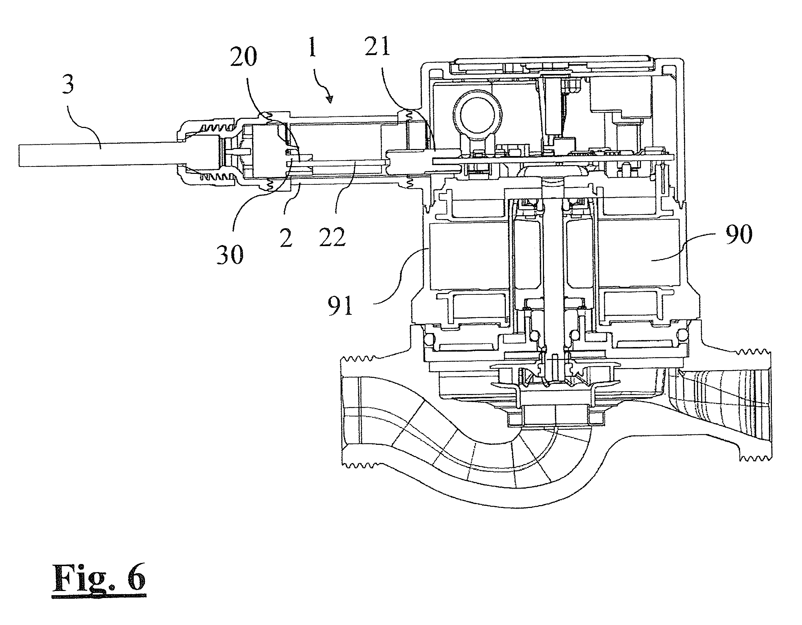

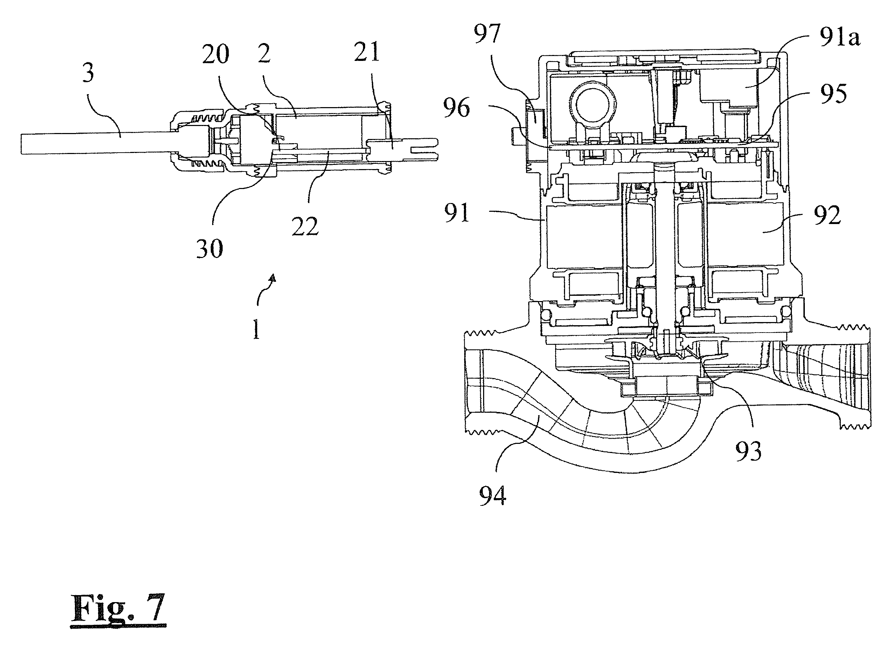

With reference to the attached Figures 1-7, 1 denotes an adapter assembly according to a first embodiment of the present invention.

The adapter assembly 1 is designed to ensure the compatibility of a synchronous-motor circulator 90, comprising a control inverter integrated inside the associated housing 91. In particular, the circulator 90 comprises, in a manner known per se, a synchronous electric motor 92 which rotationally drives an impeller 93 movable rotatably inside a volute 94 joined to the housing 91. The housing comprises a base-piece 91a which is situated opposite the volute 94 and which seats internally a local control board 95 of the synchronous electric motor 92, on which at least one control inverter is mounted. The local control board 95 is connected to a power supply connector 96 to which a power supply cable from outside the device may be coupled.

In a preferred embodiment, the power supply connector 96 is formed directly above the local control board 95 and in the case in question takes the form of a connection area provided on a peripheral edge of the local control board 95 and accessible via an opening 97 in the base-piece 91a. The respective power supply cable 3 has an end connector 30 provided with a projecting terminal designed to engage on top of the connection area.

In the embodiment described here, the circulator 90 is therefore designed to be connected solely to a power supply cable 3 provided with an end connector 30 which engages with the power supply connector 96 described above.

The adapter assembly 1 according to the first embodiment, specifically designed to be associated with circulators 90 provided solely with a power connection, takes the form of a rigid casing 2 to be arranged between the end connector 30 of the power supply cable 3 and the power supply connector 96 of the circulator 90.

The rigid casing 2 has in fact an upstream connector 20 compatible with the end connector 30 of the power supply cable 3, and a downstream electrical connector 21 compatible with the power supply connector 96 of the circulator 90. A power supply adapter circuit 4a, 4b formed on an electronic board 22 enclosed by the rigid casing 2 is arranged between the two - upstream 20 and downstream 21 - connectors.

Thus, when the two connectors 20, 21 of the adapter assembly are respectively joined together with the power supply cable 3 and the circulator 90, the power supply adapter circuit 4a, 4b, which will be described in greater detail below, is arranged between the outer control device which sends the power supply to the circulator and the local control board 95 inside the latter.

In the present embodiment, the rigid casing 2 takes the form in particular of a sleeve with a rectangular cross-section which is open at the two opposite ends so as to define the upstream connector 20 and the downstream connector 21. Flanges 23 are also advantageously provided at these ends for allowing fixing, by means of screws, of the two connectors in the engaged position.

The electronic board 22 extends inside the sleeve, in a longitudinal direction with respect thereto, and thus has two edges directed opposite the upstream connector 20 and downstream connector 21. The upstream connector 20 thus takes the form of a simple connection area provided on the peripheral edge of the electronic board 22 itself, on top of which the terminal of the end connector 30 of the cable 3 engages. The downstream connector 21 takes the form of a terminal which is directly fixed onto the electronic board and which extends so as to project beyond the opening of the sleeve and engage with the local control board 95 of the circulator.

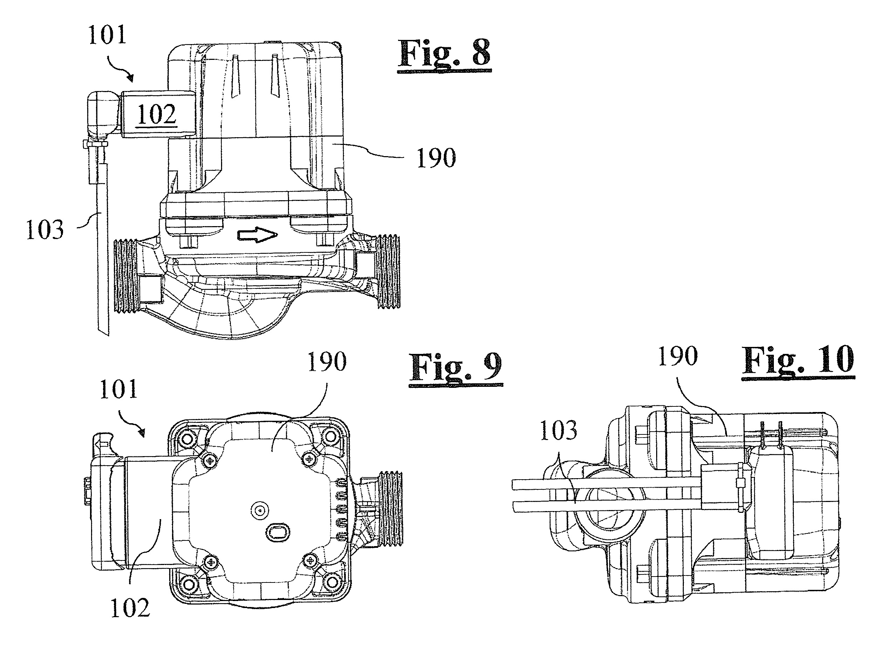

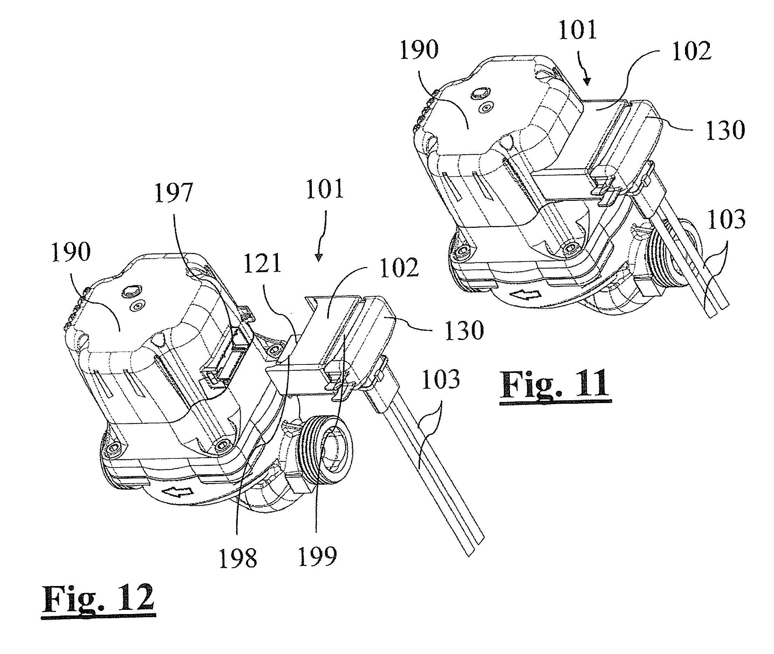

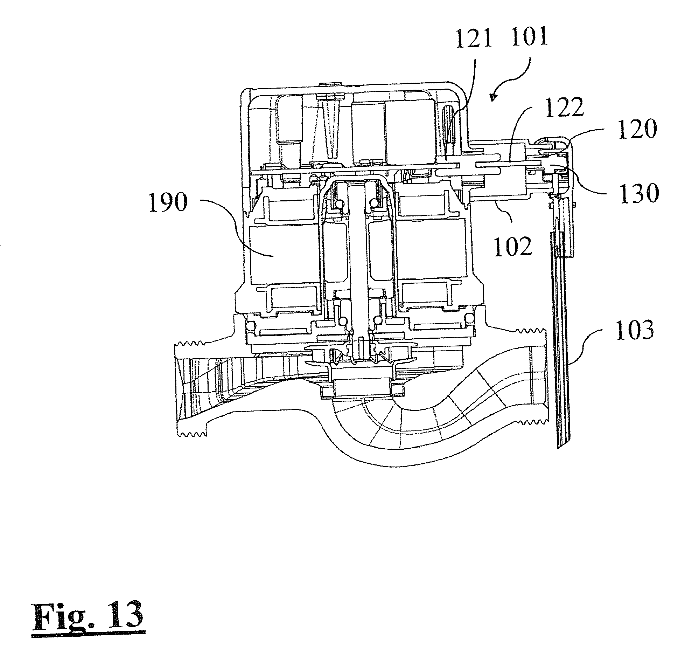

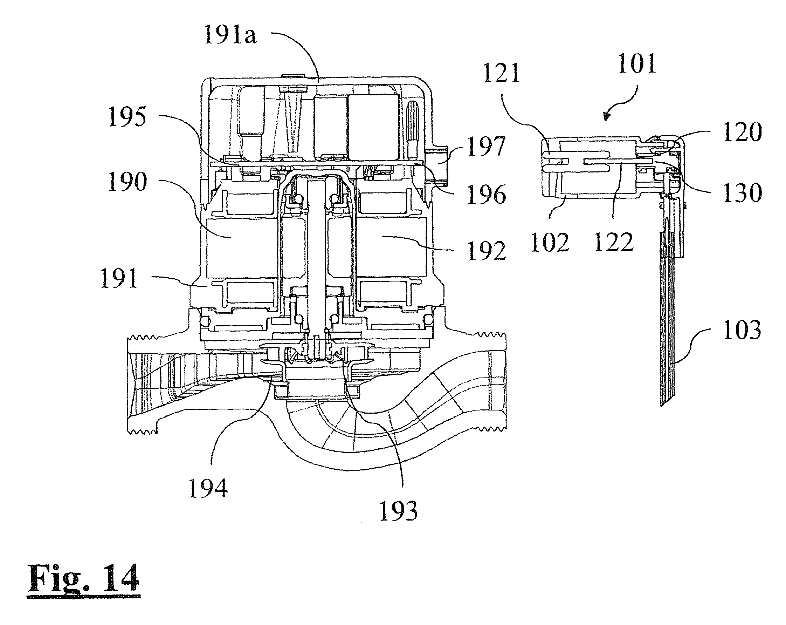

With reference to the attached Figures 8-14, 100 denotes an adapter assembly according to a second embodiment of the present invention.

The adapter assembly 100 is designed to ensure the compatibility of a synchronous-motor circulator 190, in this case also comprising a control inverter integrated inside the associated housing 191. As in the preceding case, the circulator 190 comprises, in a manner known per se, a synchronous electric motor 192 which rotationally drives an impeller 193 movable rotatably inside a volute 194 connected to the housing 191. The housing comprises a base-piece 191a which is situated opposite the volute 194 and which seats internally a local control board 195 of the synchronous electric motor 192, on which at least one control inverter is mounted. The local control board 195 is connected to a power supply and signal connector 196 to which an end connector 130 of the power supply and signal cables 103 from outside the device may be coupled.

In a preferred embodiment, the power supply and signal connector 196 is provided directly above the local control board 195 and in the case in question takes the form of a connection area provided on a peripheral edge of the local control board and accessible via a slot 197 in the base-piece 191 a, surrounded by a protruding rim. The respective end connector 130 has a projecting terminal for engagement on top of the connection area.

In the embodiment described here, the circulator 190 is therefore designed to receive both power supply and signal cables 103 advantageously joined together by an end connector 130 which defines the connection provided with an end connector 30 which is coupled to the power supply and signal connector 196 described above.

The adapter assembly 100 according to the second embodiment is specifically designed to be associated with circulators 190 provided with the power/signal connection system described above. It takes the form in particular of a rigid casing 102 to be arranged between the end connector 130 of the power supply and signal cables 103 and the power supply and signal connector 196 of the circulator 190.

The rigid casing 102 has in fact an upstream connector 120 compatible with the end connector 130 of the power supply and signal cable 103, and a downstream electrical connector 121 compatible with the power supply and signal connector 196 of the circulator 190. In this case also an adapter circuit formed on an electronic board 122 enclosed by the rigid casing 102 is arranged between the two - upstream 120 and downstream 121 - connectors.

The adapter circuitry may comprise both a power supply adapter circuit 4a, 4b, which processes the power supply signal from the respective cable, and a signal adapter circuit 5, which processes the control signal from the signal cable. Both the circuits will be described in greater detail below. The adapter assembly 100 may comprise both circuits or only one of them; these circuits are preferably, but not necessarily, formed on the same circuit board 122.

Thus, when the two connectors 120, 121 of the adapter assembly are respectively joined together with the power supply and signal cables 103 and the circulator 190, the power supply adapter circuit, where present, intercepts the power supply signal, while the signal adapter circuit, where present, intercepts the control signal.

In the present embodiment, the rigid casing 102 takes the form in particular of a sleeve with a rectangular cross-section and elongated form, which is open at the two opposite ends so as to define the upstream connector 120 and allow the downstream connector 121 to protrude. The downstream end has a concave joining profile designed to be associated with the convex side wall of the base-piece 191a. Snap-engaging means are provided for allowing the removable engagement of the rigid casing with the base-piece 191a. The opposite upstream end of the sleeve has a smaller-thickness surrounding rim designed to allow the engagement of the end connector 130.

The electronic board 122 extends inside the sleeve between the two end openings and thus has two edges directed opposite the upstream connector 120 and downstream connector 121. The upstream connector 120 thus takes the form of a simple connection area provided on the peripheral edge of the electronic board 122 itself, on top of which the terminal of the end connector 130 of the cables 103 engages. The downstream connector 121 takes the form of a terminal which is directly fixed onto the electronic board and which extends so as to project beyond the opening of the sleeve and engage with the local control board 195 of the circulator 190.

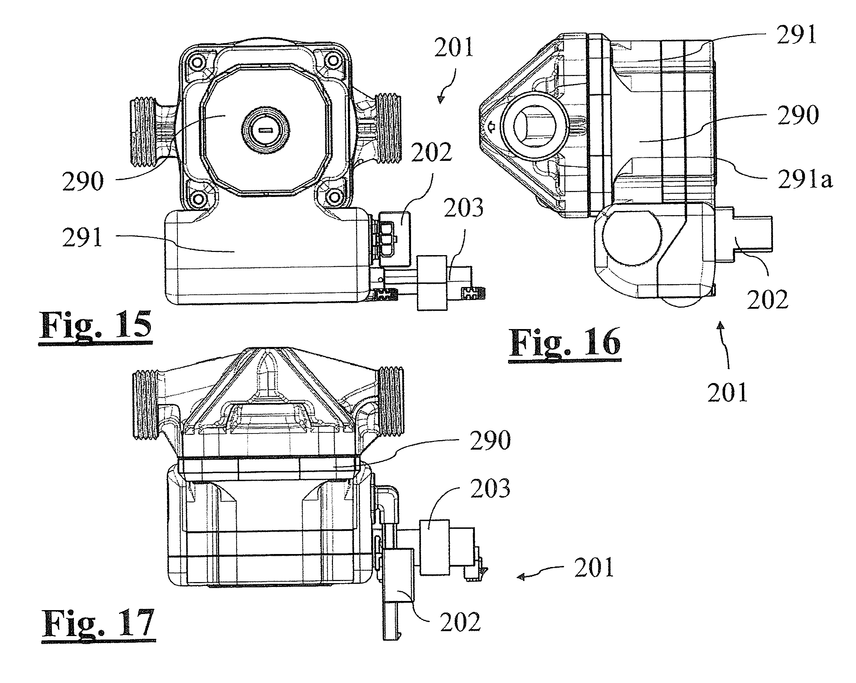

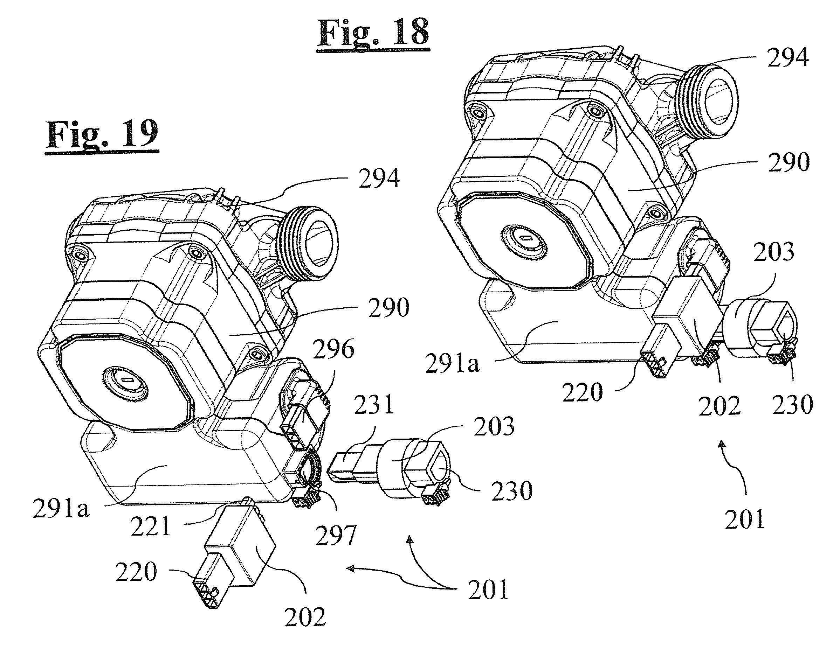

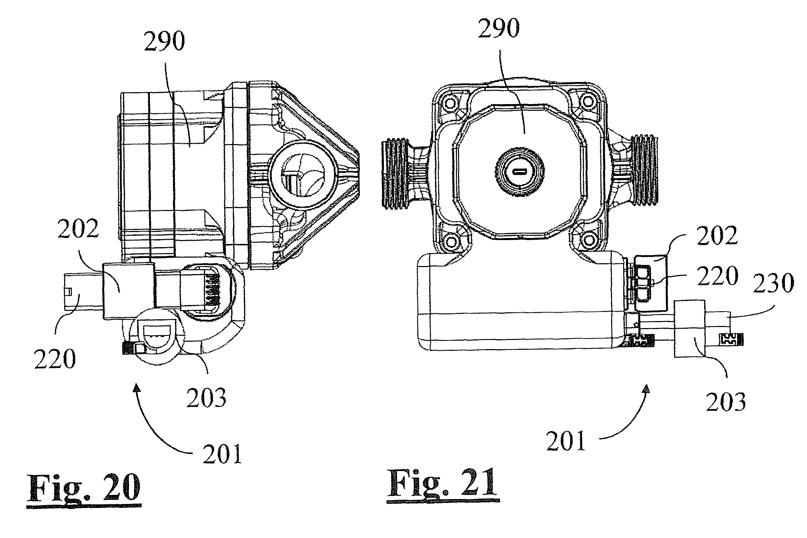

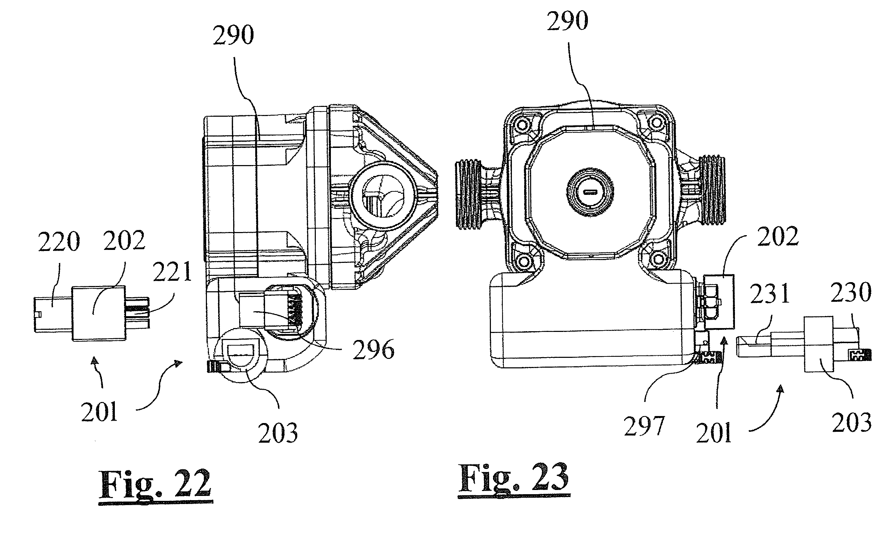

With reference to the attached Figures 15-23, 200 denotes an adapter assembly according to a third embodiment of the present invention.

The adapter assembly 200 is designed to ensure the compatibility of a synchronous-motor circulator 290, in this case also comprising a control inverter integrated inside the associated housing 291. As in the preceding case, the circulator 290 comprises, in a manner known per se, a synchronous electric motor which rotationally drives an impeller movable rotatably inside a volute 294 coupled to the housing 291. The housing also comprises a base-piece 291a which is situated opposite the volute 294. The internal control circuitry of the synchronous electric motor, which is provided with at least one control inverter, is enclosed inside the housing 291 and its base-piece 291. A power supply cable 296 extends from the housing portion 291 in an elbow form and may receive, engaged thereon, an end connector of a power supply cable, not shown in the attached figures. A signal connector 297, on which an end connector of a signal cable, not shown in the attached figures may be engaged, is instead formed on the base-piece portion 291a. It should be noted that both the power supply connector 296 and signal connector 297 are provided on a lateral protuberance of the housing/base-piece unit inside which the internal control circuitry is at least partially enclosed.

In a preferred embodiment, the power supply connector 296 takes the form of a three-hole socket inside which a corresponding plug of the end connector of the power supply cable is inserted. The signal connector 297 is instead defined by a socket with semi-circular engaging seat inside which a corresponding plug of the end connector of the signal cable is inserted.

In the embodiment described here, the circulator 290 is therefore designed to receive separately a power supply cable and a signal cable which are engaged in two sockets different from each other.

The adapter assembly 200 according to the third embodiment is specifically designed to be associated with circulators 290 provided with the separate power and signal connection system described above. It takes the form in particular of a first rigid casing 202 to be arranged between the end connector of the power supply cables and the power supply connector 296 of the circulator 290 and a second rigid casing 203 to be arranged between the end connector of the signal cables and the signal connector 297 of the circulator 290.

The first rigid casing 202 has an upstream connector 220 compatible with the end connector of the power supply cables and a downstream electrical connector 221, compatible with the power supply connector 296 of the circulator 290. A power supply adapter circuit 4a, 4b is arranged between the two connectors, i.e. upstream connector 220 and downstream connector 221, being preferably formed on an electronic board enclosed by the first rigid casing 202. Similarly, the second rigid casing 203 has an upstream connector 230 for the signal cable and a downstream electric connector 231 which can be engaged on the signal connector 297 of the circulator 290: a signal adapter circuit 5 is arranged between the two connectors.

Thus, when the two rigid casings 202, 203 are engaged in position, the respective power supply adapter circuits 4a, 4b and signal 5 define two separate interfaces for the power supply signal and for the control signal.

It should be noted that the first casing 202 and the second casing 203 may be used and commercially distributed separately; the protection required for the present invention thus embraces the single rigid casing respectively intended for adaptation of the power supply or the signal.

In the present embodiment the first rigid casing 202 takes the form of a parallelepiped-shaped housing which has on two opposite sides a projecting three-hole socket which defines the upstream connector 220 and a similar plug which defines the downstream connector 221. The second rigid casing 203 instead takes the form of a substantially cylindrical shaped plug which has at one end a semi-circular impression which defines the upstream connector 230 and at the opposite end a similar insert which defines the downstream connector 231.

By way of example, two possible variants for the power adapter circuit 4a, 4b, which may be equally well applied to any one of the embodiments of the adapter assembly described above, are now described. Other variants of the power supply adapter circuit, which are not specifically described in the present description, may obviously be adopted in the context of the present invention.

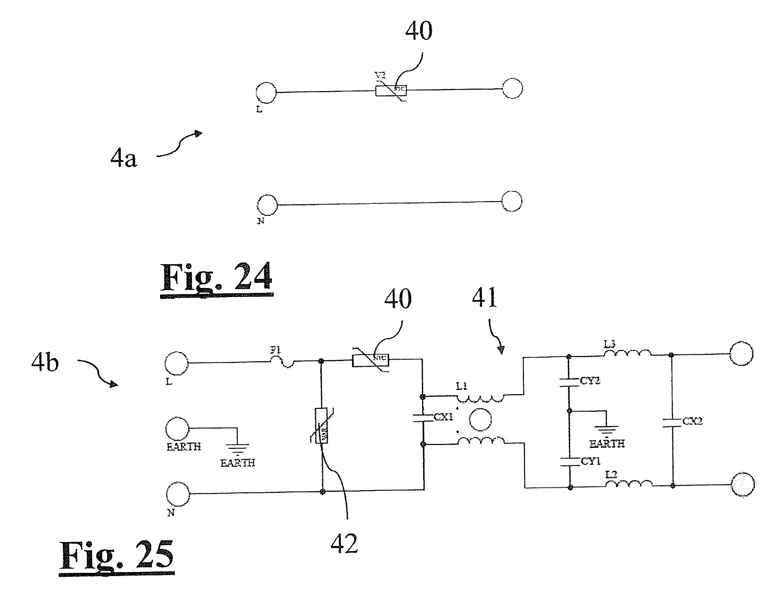

A first power supply adapter circuit 4a, shown in Figure 24, is distinguished by its particular constructional simplicity. It proposes two independent branches for connecting respectively the live and neutral inputs of the two opposite connectors, where one or both the branches in question - in the embodiment shown the live branch - are intercepted by an NTC thermistor 40. The NTC thermistor 40 is chosen with characteristics such as to allow the protection of the external control devices from the inrush currents arising from the inverter of the circulator with which the adapter assembly is associated.

A second power supply adapter circuit 4b, which is illustrated in Figure 25, has, in addition to an NTC protection thermistor 40 inserted along one of the live or neutral branches, an EMI filter 41 which attenuates the electromagnetic disturbances generated by the synchronous motor and protects the electronics of the circulator from external interference. This EMI filter has moreover a protection varistor 42 at the input.

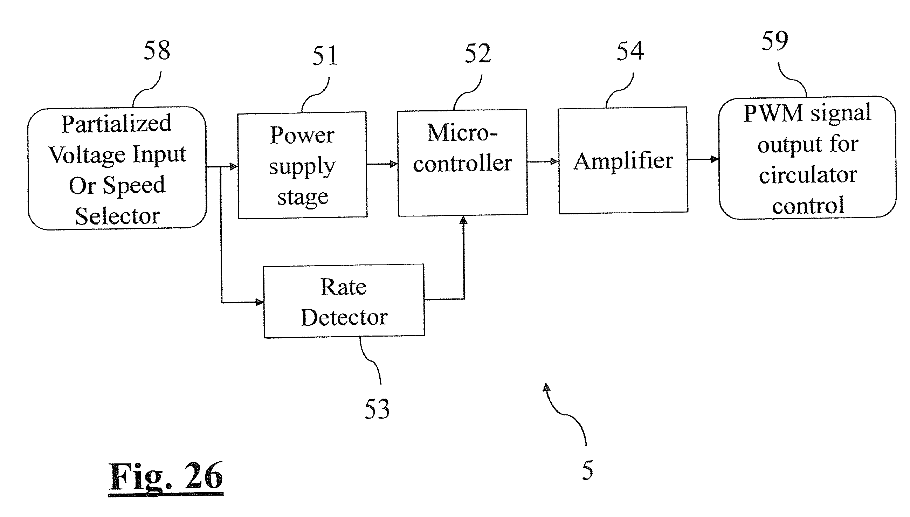

Purely by way of example, a possible generic design of the signal adapter circuit 5 is now described, in accordance with that shown in the attached Figure 26. Other design variations of the same circuit, not specifically described in the present description, may obviously be adopted in the context of the present invention.

The signal adapter circuit 5 receives at its input an upstream control signal 58 derived from a speed selector or from a regulated current input, obtained for example by means of an external control device with TRIAC. The signal is processed via a power supply block 51 and from here transmitted to a control block by means of which, following detection of a rate detector 53, a PWM control signal is reconstructed and is then amplified by means of the block 54 and transmitted to the output of the circuit. The PWM control signal 59 transmitted to the output is a digital control signal able to control the inverter controlling operation of the synchronous-motor circulator.

Obviously a person skilled in the art, in order to satisfy any specific requirements which might arise, may make numerous modifications and variations to the device described above, all of which are contained moreover within the scope of protection of the invention, as defined by the following claims.

## Claims

1. Adapter assembly (1, 101, 201) for a circulator, comprising: at least one rigid casing (2, 102, 202, 203) provided with at least one upstream electrical connector (20, 120, 220, 230) intended to be removably connected to the end connector (30, 130) of a power and/or signal cable (3, 103), and at least one respective downstream electrical connector (21, 121, 221, 231) intended to be directly connected, removably, to a synchronous-motor circulator (90, 190, 290); and an adapter circuit housed inside said at least one rigid casing and connecting the at least one upstream electrical connector (20, 120, 220, 230) to the respective downstream electrical connector (21, 121, 221, 231).

2. Adapter assembly (1, 101, 201) according to Claim 1, wherein at least one upstream electrical connector (20, 120, 220) is designed for connection to a power cable (3, 103), said adapter circuitry comprising at least one power supply adapter circuit (4a, 4b) designed to receive an electric power supply via said power cable (3, 103) connected to the upstream electrical connector (20, 120, 220) and transmit it to the circulator (90, 190, 290), via the respective downstream electrical connector (21, 121, 221), said power supply adapter circuit comprising means for protection against the inrush currents.

3. Adapter assembly (1, 101, 201) according to Claim 2, wherein said means for protection against inrush currents comprise at least one NTC thermistor (40).

4. Adapter assembly (1, 101, 201) according to either one of Claims 2 or 3, wherein said power supply adapter circuit comprises at least one EMI filter (41).

5. Adapter assembly (1, 101, 201) according to Claim 4, wherein said EMI filter (41) comprises a protection varistor (42) at the input.

6. Adapter assembly (101, 201) according to one of the preceding claims, wherein at least one upstream electrical connector (120, 230) is designed for connection to a signal cable (103), said adapter circuitry comprising at least one signal adapter circuit (5), the input of which is connected to the upstream electrical connector (120, 230) and the output of which is connected to the respective downstream electrical connector (121, 231), said signal adapter circuit (5) being designed to convert an upstream control signal (58) into a PWM control signal (59) suitable for controlling a synchronous-motor circulator (90, 190, 290).

7. Adapter assembly (101, 201) according to Claim 6, wherein said signal adapter circuit (5) is designed to convert an upstream control signal (58) originally designed to control an asynchronous-motor circulator.

8. Adapter assembly (101, 201) according to either one of Claims 6 or 7, wherein said signal adapter circuit (5) is designed to convert an upstream control signal (58) of the analog type.

9. Adapter assembly (101, 201) according to one of Claims 6-8, wherein said signal adapter circuit (5) is designed to convert the upstream control signal (58) into a PWM control signal (59) suitable for controlling a control inverter (90, 190, 290) of the synchronous-motor circulator (90, 190, 290).

10. Adapter assembly (101) according to Claim 6 when dependent on Claim 2, wherein said rigid casing (102) contains both the power supply adapter circuit (4a, 4b) and signal adapter circuit (5).

11. Adapter assembly (201) according to Claim 6 when dependent on Claim 2, wherein said rigid casings are two in number and separate from each other: a first rigid casing (202) which contains the power supply adapter circuit (4a, 4b) and a second rigid casing (203) which contains the signal adapter circuit (5); said first rigid casing (202) and second rigid casing (203) both comprising a respective upstream electrical connector (220, 230) and downstream electrical connector (221, 231).

12. Adapter assembly (1, 101, 201) according to one of the preceding claims, wherein said at least one downstream electrical connector (21, 121, 221, 231) is directly joined, without interconnecting wires, to an electronic board (22, 122) which forms said adapter circuitry.

13. Adapter assembly (1, 101, 201) according to Claim 12, wherein said at least upstream electrical connector (20, 120, 220, 230) is directly formed on the periphery of said electronic board (22, 122).

14. Adapter assembly (1, 101, 201) according to Claim 13, wherein said downstream electrical connector (21, 121, 221, 231) is situated opposite said upstream electrical connector (20, 120, 220, 230).

15. Adapter assembly (1, 101, 201) according to one of the preceding claims, wherein said upstream electrical connector (20, 120, 220, 230) and said downstream electrical connector (21, 121, 221, 231) are respectively a female connector and male connector, or vice versa, compatible with each other.
